# EUROPÄISCHE PATENTSCHRIFT

(11) **EP 4 356 035 B1**
(45) Veröffentlichungstag und Bekanntmachung des Hinweises auf die Patenterteilung: **02.04.2025**
(21) Anmeldenummer: 22733104.8
(22) Anmeldetag: 14.06.2022
(51) Int. Cl.: F16L 13/14

(54) **PRESSVERBINDUNGSSYSTEM ZUM UNLÖSBAREN VERBINDEN EINES FITTINGS UND FITTING**
PRESS-CONNECTION SYSTEM FOR THE NON-RELEASABLE CONNECTION OF A FITTING, AND FITTING
SYSTÈME DE RACCORDEMENT À LA PRESSE POUR LE RACCORDEMENT NON LIBÉRABLE D'UN RACCORD ET RACCORD

(30) Priorität: 14.06.2021 DE 102021115306
(43) Veröffentlichungstag der Anmeldung: 24.04.2024
(73) Patentinhaber: Viega Technology GmbH & Co. KG, 57439 Attendorn (DE)
(72) Erfinder: ROSENTHAL, Jörg, 51580 Reichshof-Eckenhagen (DE); ARNIG, Ulrich, 57439 Attendorn (DE); FRANKE, Bernd, 57413 Finnentrop-Schönholthausen (DE)
(74) Vertreter: Cohausz & Florack
(86) Internationale Anmeldenummer: PCT/EP2022/066168
(87) Internationale Veröffentlichungsnummer: WO 2022/263443

(56) Entgegenhaltungen:
- WO-A1-2017/043966
- WO-A1-2018/085185
- DE-A1- 102009 007 303

## Beschreibung

Die Erfindung betrifft ein Pressverbindungssystem zum unlösbaren Verbinden eines Fittings mit einem Rohr, mit einer Pressbacke, mit einer an der Innenseite der Pressbacke ausgebildeten Presskontur, wobei die Presskontur einen zylindrischen Pressabschnitt aufweist, mit einem Fitting, mit einem Fittinggrundkörper und einer eine Presskammer ausbildenden Presshülse, wobei ein Dichtring am relativ zum Fittinggrundkörper proximalen Ende der Presskammer und ein Schneidring am relativ zum Fittinggrundkörper distalen Ende der Presskammer angeordnet sind und wobei der Schneidring einen mittigen zylindrischen Abschnitt, am distalen Ende angeordnete Schneidelemente und am proximalen Ende angeordnete Schneidelemente aufweist. Die Erfindung betrifft auch einen vorgenannten Fitting im verpressten Zustand.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases, ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings in, beispielsweise in Form einer Presshülse, bei eingestecktem Rohrabschnitt mittels einer Pressbacke radial nach innen so umgeformt wird, dass eine dauerhafte, dichte und unlösbare Verbindung hergestellt wird. Als unlösbare Verbindung wird dabei eine Verbindung zwischen Fitting und Rohr verstanden, die nur unter zumindest teilweise Zerstörung der miteinander verbundenen Komponenten auseinander genommen werden kann.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Aus der WO 2017/043966 A1 ist ein gattungsbildendes Pressverbindungssystem, sowie ein gattungsbildender Pressfitting bekannt.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Die Fittings und Rohre sind vorzugsweise aus festen oder hochfesten Werkstoffen hergestellt, vorzugsweise aus Metallen und aus Legierungen, insbesondere aufweisend Kupfer, Nickel und/oder Stahl.

Die Pressbacke kann in unterschiedlicher Form ausgebildet sein. Zum einen kann die Pressbacke zwei Pressbackeneinsätze in Hebelform ohne oder mit einem zusätzlichen Presselement in Form eines Keils aufweisen. Die Pressbacke kann zum anderen zwei, vorzugsweise rundliche Pressbackeneinsätze ohne oder mit einem zusätzlichen Presselement in Form eines Keils aufweisen. Darüber hinaus kann eine Pressbacke als Pressschlinge oder Presskette bestehend aus drei oder mehr, vorzugsweise rundlichen, Pressbackeneinsätzen ohne oder mit zusätzlichen Presselement in Form eines Keils aufweisen.

Eine Pressbacke weist üblicher Weise zwei Pressbackeneinsätze in Hebelform ohne oder mit einem zusätzlichen Presselement in Form eines Keils. Ein Pressring kann dagegen aus zwei, vorzugsweise rundliche Pressbackeneinsätzen ohne oder mit zusätzlichen Presselement (Pressbacke ohne/mit Keil)

Eine Pressschlinge oder Presskette besteht aus 3 oder mehr rundlichen Pressbackeneinsätzen ohne oder mit zusätzlichen Presselement (Pressbacke ohne/mit Keil)

Des Weiteren ist in bevorzugter Weise zwischen dem Schneidring und dem Dichtring ein Trennring angeordnet, der einen Abstand zwischen dem Schneidring und dem Dichtring bewerkstelligt und eine Beschädigung des Dichtrings durch die Schneidelemente des Schneidrings verhindert. Die Anordnung eines Trennrings ist aber nicht notwendig.

Während des Verpressens drückt die Pressbacke durch eine radial einwärts gerichtet Bewegung mit dem zylindrischen Pressabschnitt die Presshülse und damit den Dichtring und den Schneidring radial gleichförmig nach innen. Somit dringen die Schneidelemente im Wesentlichen mit gleicher Tiefe in das Material des Rohrs ein.

Das Eindringen der Schneidelemente in das Material des Rohres bewirkt ein Fixieren des Rohrs relativ zum Fitting in beiden axialen Richtungen. Zum Teil wirkt das Eindringen der Schneidelemente auch einer Drehsicherung. Die Sicherung der axialen Position ist unter anderem für die Sicherung gegenüber einem Bersten der unlösbaren Verbindung bei einer zu starken mechanischen Belastung, sei es durch einen zu hohen Innendruck des geführten Mediums oder durch eine mechanische Einwirkung von außen.

Bei Testversuchen hat sich eine gute Belastbarkeit der bisher eingesetzten Fittings auch unter großen mechanischen Einwirkungen, beispielsweise durch Schlagversuche in axialer und radialer Richtung herausgestellt. Gleichwohl müssen die Fittings auch unter extremen Beanspruchungen bei spezifischen Anwendung standhalten.

Daher liegt der vorliegenden Erfindung das technische Problem zugrunde, die Auszugsicherung und Berstbeständigkeit des verpressten Fittings weiter zu verbessern.

Das zuvor aufgeführte technische Problem wird erfindungsgemäß bei einem eingangs genannten Pressverbindungssystem dadurch gelöst, dass die Presskontur einen an den zylindrischen Pressabschnitt angrenzenden, zumindest abschnittsweise, konisch ausgebildeten distalen Pressabschnitt und einen an den zylindrischen Pressabschnitt angrenzenden, zumindest abschnittsweise, konisch ausgebildeten proximalen Pressabschnitt aufweist, dass der distale Pressabschnitt ausgebildet ist, um bei einem radialen Verpressen der Presshülse das distale Ende des Schneidrings radial nach innen umzuformen, dass der zylindrische Pressabschnitt ausgebildet ist, um bei einem radialen Verpressen der Presshülse das proximale Ende des Schneidrings radial nach innen umzuformen und dass der proximale Pressabschnitt ausgebildet ist, um bei einem radialen Verpressen der Presshülse den Dichtring radial nach innen umzuformen.

Das zuvor beschriebene System führt nach einer Betätigung der Pressbacke zu einem verpressten Fitting, der unlösbar mit einem Rohr verbunden ist, wobei im radial verpressten Zustand der Presshülse das distale Ende des Schneidrings, zumindest abschnittsweise, auf einen Radius kleiner als der Radius des proximalen Endes des Schneidrings nach innen umgeformt ist und wobei die distalen Schneidelemente, zumindest abschnittsweise, tiefer als die proximalen Schneidelemente in das Rohr eingedrungen sind.

Die zumindest teilweise konische Ausbildung der Pressabschnitte bedeutet dabei, dass die Pressabschnitte teilweise oder vollumfänglich die konische Form annehmen. Eine teilweise Ausbildung kann dabei mit umfangseitig konisch nach innen gerichteten Abschnitten erreicht werden. Entsprechend der gänzlichen oder teilweisen Verteilung der konischen Abschnitte des Pressabschnitts wird dann die Presshülse zumindest abschnittsweise auf einen kleineren Radius umgeformt.

Im verpressten Zustand sind die distalen Schneidelemente also, zumindest abschnittsweise, tiefer in das Material des Rohrs eingedrungen, als es für die proximalen Schneidelemente der Fall ist. Der vor dem Verpressen zylindrisch ausgebildete Abschnitt des Schneidrings, an dem die distalen Schneidelemente und die proximalen Schneidelemente angeordnet bzw. ausgebildet sind, wird dazu durch den, zumindest abschnittsweise, konisch ausgebildeten distalen Pressabschnitt zusammen mit dem zylindrischen Pressabschnitt in eine konisch sich in distaler Richtung verjüngende Form gebracht.

Die Auszugsbeständigkeit der Verbindung zwischen Fitting und Rohr wird bevorzugt auch dadurch erhöht, dass die distalen Schneidelemente in proximaler Richtung ausgerichtet sind. Da die distalen Schneidelemente tiefer als bei herkömmlich verpressten Fittings in das Rohrmaterial eingedrungen sind, weist das verpresste Fitting eine erhöhte Beständigkeit gegenüber Auszugskräften und insbesondere gegenüber einem Überdruck auf, der durch das im Rohr geführte Medium hervorgerufen wird.

Im Folgenden wird die Erfindung anhand eines Ausführungsbeispiels mit Bezug auf die Zeichnung erläutert. In der Zeichnung zeigen
- Fig. 1: einen Ausschnitt eines erfindungsgemäßen Presssystems vor dem Pressvorgang,
- Fig. 2: das in Fig. 1 gezeigte Presssystem nach dem Pressvorgang,
- Fig. 3: das Presssystem nach Fig. 1 in einer Seitenansicht,
- Fig. 4: das Presssystem nach Fig. 1 im Querschnitt entlang der Linie IV-IV in Fig. 3,
- Fig. 5: das Pressprofil der Pressbacke nach Fig. 1
- Fig. 6: ein Presssystem nach dem Stand der Technik vor dem Pressvorgang im Querschnitt und
- Fig. 7: das in Fig. 6 gezeigte Presssystem nach dem Pressvorgang.

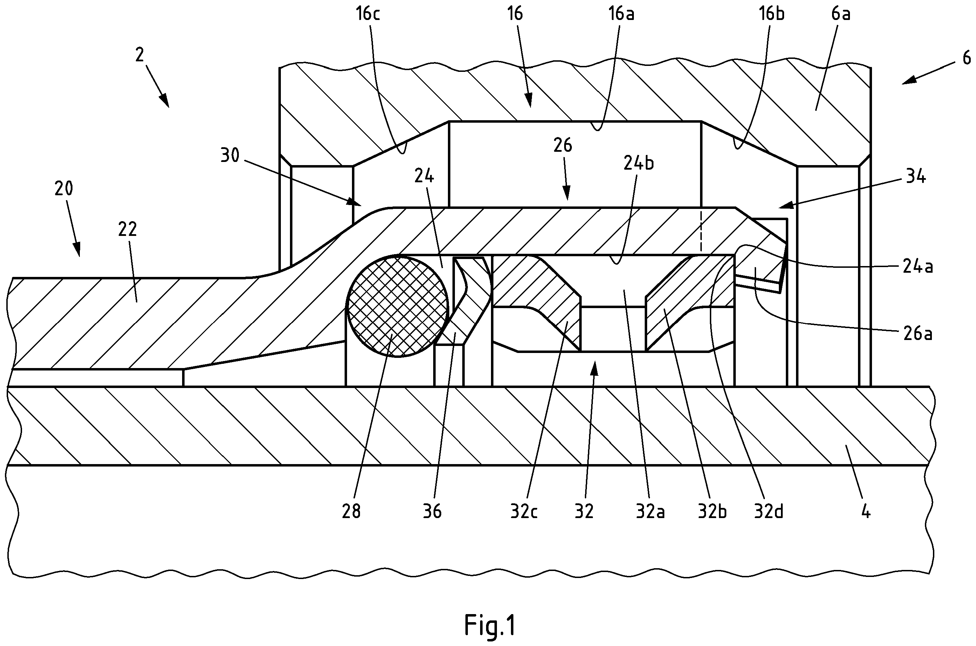

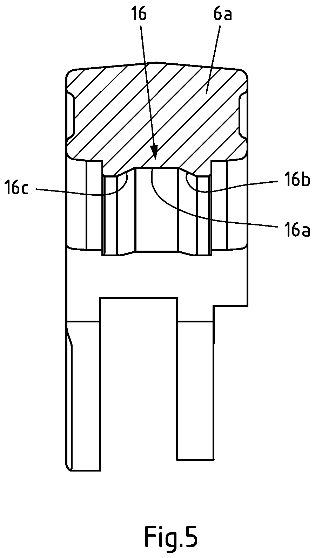

Ein erfindungsgemäßes Ausführungsbeispiel eines Pressverbindungssystems wird im Folgenden anhand der Fig. 1 bis 5 erläutert.

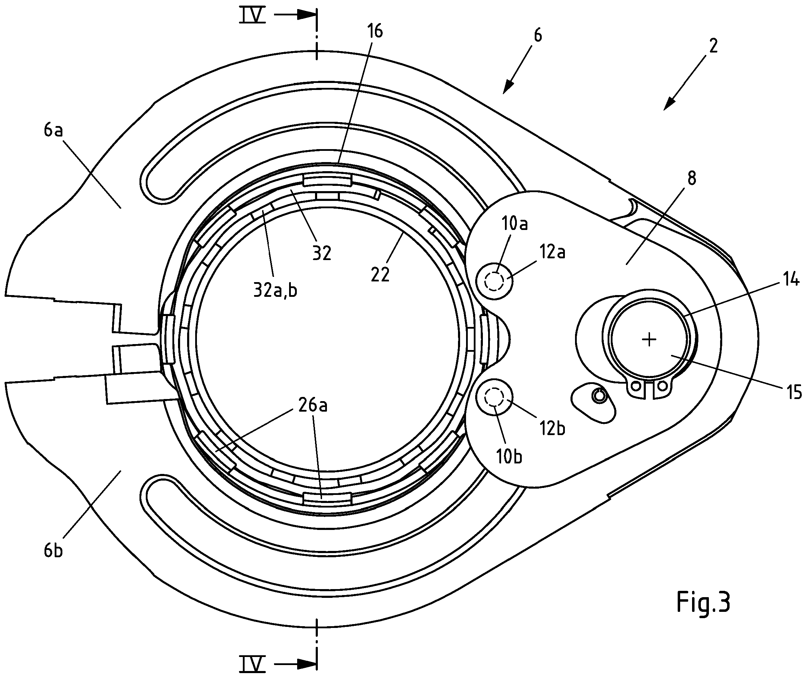

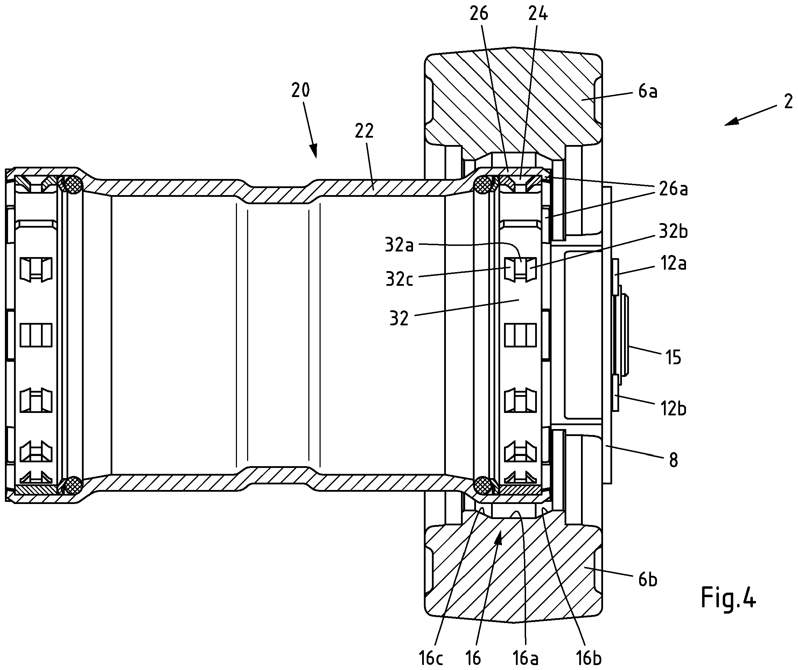

Das Pressverbindungssystem 2 zum unlösbaren Verbinden eines Fittings mit einem Rohr 4 weist zunächst eine Pressbacke 6 auf, die aus zwei Pressbackenhälften 6a und 6b besteht, die Teil eines Presswerkzeugs sind und mit beidseitig angeordneten Haltelaschen 8 gehalten sind, siehe dazu insbesondere die Fig. 3 und 4. Enden Die Haltelaschen 8 weisen zwei Bohrungen 10a und 10b auf, in denen zwei Achsen 12a und 12b angeordnet sind, an denen die beiden Pressbackenhälften 6a und 6b verschwenkbar befestigt sind. Eine weitere Bohrung 14 für einen Befestigungsbolzen 15 ist ebenfalls in den Haltelaschen 8 vorgesehen. Die Pressbacke 6 ist also als Pressschlinge ausgebildet, die an den offenen, der Bohrung 14 gegenüber liegenden Enden mit einem Presswerkzeug zusammengedrückt werden kann.

Der Antriebsmechanismus des Presswerkzeugs steht wiederum mit einem Presswerkzeug in Wirkverbindung, der insbesondere einen Doppelrollenstößel mit zwei Rollen aufweist. Der Doppelrollenstößel ist insbesondere hydraulisch oder elektrisch angetrieben, der Antrieb kann aber auch durch einen Kniehebel realisiert sein. Der Doppelrollenstößel wechselwirkt mit einer an dem Antriebsmechanismus ausgebildeten Einlaufkontur zusammen und drückt die Pressbackenhälften auseinander, so dass die Pressbackenhälften im Bereich der Presskontur zusammengedrückt werden.

Die Pressbacke 6 mit den Pressbackenhälften 6a und 6b weist an der Innenseite eine Presskontur 16 auf, die zunächst einen zylindrischen Pressabschnitt 16a aufweist.

Des Weiteren weist das Pressverbindungssystem 2 einen Fitting 20 auf, wobei das Fitting 20 mit einen Fittinggrundkörper 22 und einer eine Presskammer 24 aufweisenden Presshülse 26 ausgebildet ist. Innerhalb der Presskammer 24 sind ein Dichtring 28 am relativ zum Fittinggrundkörper 22 proximalen Ende 30 der Presskammer 24 und ein Schneidring 32 am relativ zum Fittinggrundkörper 22 distalen Ende 34 der Presskammer 24 angeordnet. Zwischen dem Dichtring 28 und dem Schneidring 32 ist zusätzlich noch ein Trennring 36 angeordnet. Umfangseitig am distalen Ende der Presshülse 26 ausgebildete umgebördelte Abschnitte 26a dienen dabei einer Positionierung der in der Presskammer 24 angeordneten Elemente.

Der Schneidring 32 weist einen mittigen zylindrischen Abschnitt 32a, am distalen Ende angeordnete Schneidelemente 32b und am proximalen Ende angeordnete Schneidelemente 32c auf.

Die Presskontur 16 weist weiterhin einen an den zylindrischen Pressabschnitt 16a angrenzenden konischen distalen Pressabschnitt 16b und einen an den zylindrischen Pressabschnitt 16a angrenzenden konischen proximalen Pressabschnitt 16c auf. Dabei ist der distale Pressabschnitt 16b ausgebildet, um bei einem radialen Verpressen der Presshülse 26 und damit der Presskammer 24 das distale Ende des Schneidrings 32 radial nach innen umzuformen. Der zylindrische Pressabschnitt 16a ist weiterhin ausgebildet, um bei einem radialen Verpressen der Presshülse 26 das proximale Ende des Schneidrings 32 radial nach innen umzuformen, und der proximale Pressabschnitt 16c ist ausgebildet, um bei einem radialen Verpressen der Presshülse 26 den Dichtring 28 radial nach innen umzuformen.

Wie aus Fig. 1 zu erkennen ist, liegt die distale äußere Kante 32d des Schneidrings 32 an der inneren Kante 24a der Presskammer 24 an und der zylindrische Abschnitt 32a des Schneidrings 32 am zylindrischen Abschnitt 24b der Presskammer 24 an. Die Position der inneren Kante 24a liegt dabei in distaler Richtung außerhalb der mit Hilfe der gestrichelten Linie dargestellten Kante zwischen dem zylindrischen Pressabschnitt 16a und dem konischen distalen Pressabschnitt 16b. Daher wird die distale äußere Kante 32d des Schneidrings 32 durch den konischen Verlauf des Pressabschnitts 16b weiter radial nach innen als das proximale Ende des Schneidrings 32 durch den Pressabschnitt 16a umgeformt.

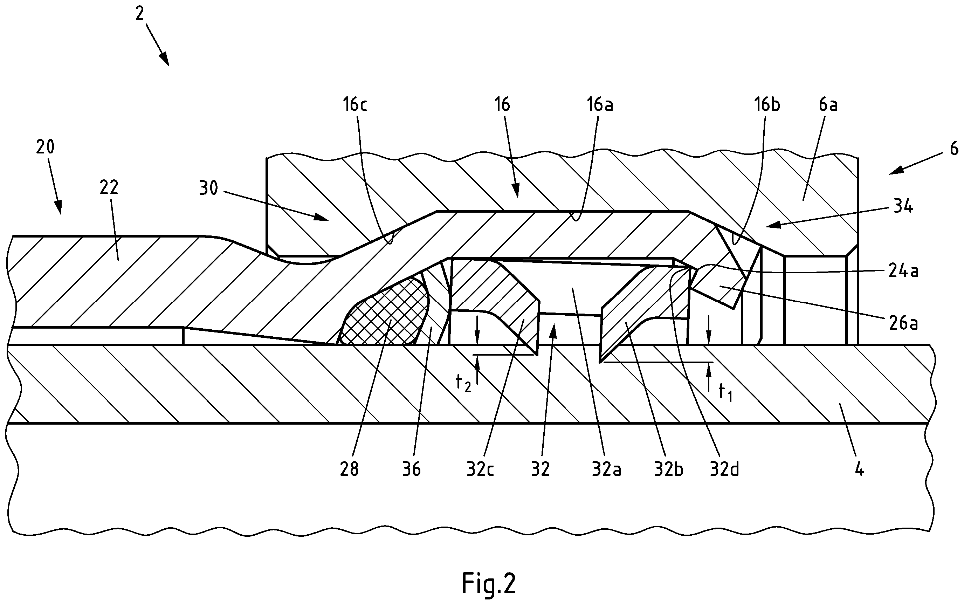

Fig. 1 zeigt den Zustand des Pressverbindungssystems 2 vor dem Verpressen und Fig. 2 zeigt den Zustand des Pressverbindungssystems 2 und insbesondere des Fittings 20 nach dem Verpressen mit dem Rohr 4.

Im radial verpressten Zustand der Presshülse 26 sind der Schneidring 32 und der Dichtring 28 sowie der Trennring 36 radial nach innen umgeformt und die Schneidelemente 32b und 32c sind im Bereich der Schneidkante teilweise in das Rohr 4 eingedrungen. Aufgrund des konisch ausgebildeten Pressabschnitts 16b und des zylindrischen Pressabschnitts 16a ist im radial verpressten Zustand der Presshülse 26 das distale Ende des Schneidrings 32 auf einen Radius kleiner als der Radius des proximalen Endes des Schneidrings 32 nach innen umgeformt ist. Dadurch sind die distalen Schneidelemente 32b tiefer als die proximalen Schneidelemente 32 in das Rohr 4 eingedrungen.

In Fig. 2 sind die Eindringtiefen t₁ und t₂ der Schneidelemente 32b und 32c eingezeichnet, und es gilt, dass t₁ größer als t₂ ist. Die asymmetrische radiale Umformung wird auch durch den Winkel zwischen dem zylindrischen Abschnitt 32a des Schneidrings 32 und dem zylindrischen Abschnitt 24b der Presskammer 24 deutlich.

Zudem trägt aufgrund der Konstruktion der Schneidelemente 32b und 32c zur verbesserten Haltekraft in Auszugsrichtung, in den Fig. 1 und 2 nach rechts, bei. Die Seite des Schneidelements 32b wirkt mit der steil verlaufenden und gegen die Auszugsrichtung gerichteten Schneidkante mehr zur Haltekraft der Verbindung bei, als die schräg verlaufende Schneidkante des Schneidelements 32. Durch das Verkippen des Schneidrings 32 beim Verpressen und dadurch, dass die steil verlaufende Fläche einen geringen Winkel zur Senkrechten aufweist, entsteht eine zusätzliche kleine Kraftkomponente, die den Schneidring 32 zum Rohr 4 hinzieht. Zusätzlich ist ein Abrutschen des Schneidrings 32 unwahrscheinlicher geworden, denn die schräge Schneidkante des Schneidelements 32c neigt infolge des Kippwinkels des Schneidrings 32 eher zum Abheben von Material des Rohres 4, ähnlich einem Pflug.

Insgesamt wird dadurch eine verstärkte unlösbare Verbindung zwischen dem Fitting 20 und dem Rohr 4 erreicht, da die Schneidelemente 32b entgegen der Auszugsrichtung des Rohres 4 aus dem Fitting 20 heraus wirken und tiefer als im Stand der Technik in das Rohr 4 eingedrungen sind.

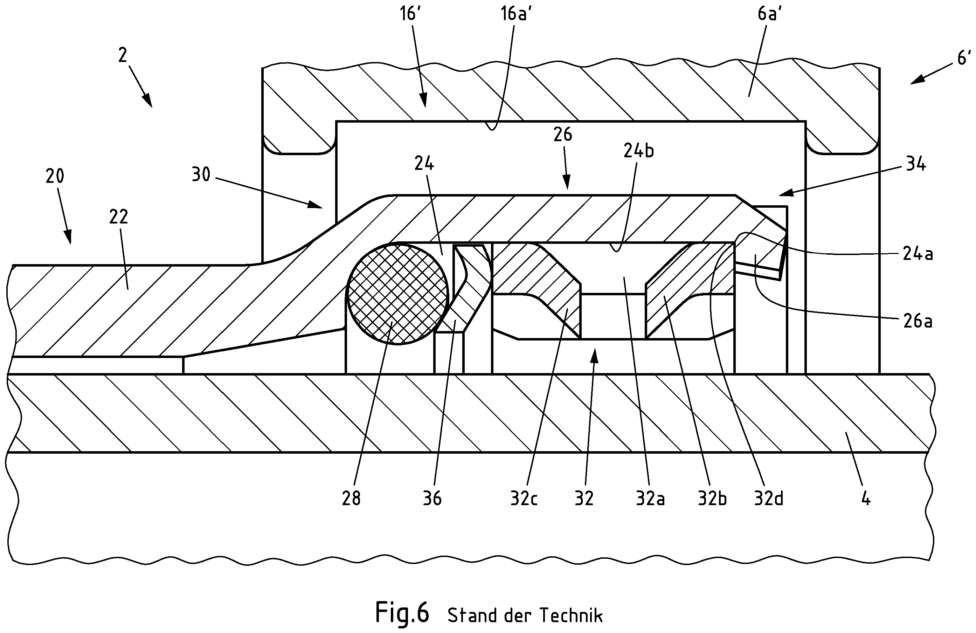

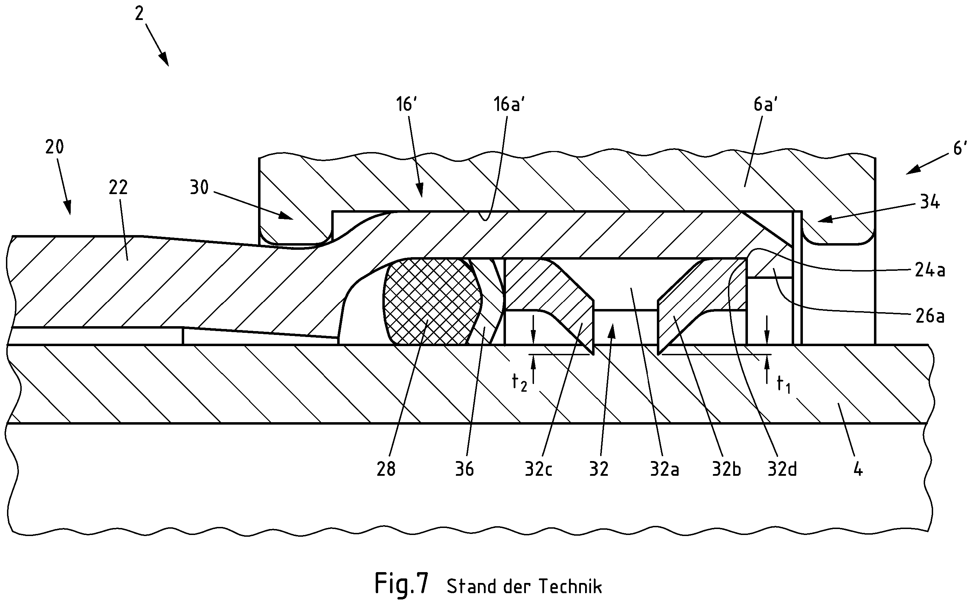

Dieses wird im Vergleich des zuvor beschriebenen Ausführungsbeispiels des Pressverbindungssystem 2 nach Fig. 1 mit dem verpressten Fitting 20 nach Fig. 2 mit dem mit einem aus dem Stand der Technik bekannten und in den Fig. 6 und 7 dargestellten Pressverbindungssystem 2' deutlich.

Das Fitting 20 mit seinen Elementen ist identisch wie beim Ausführungsbeispiel nach den Fig. 1 bis 5. Die Pressbacke 6' weist jedoch eine Presskontur 16'mit nur einem zylindrischen Pressabschnitt 16a' auf, die insgesamt die Presshülse 26 und dabei den Dichtring 28, den Trennring 28 und den Schneidring 32 in gleicher Weise radial nach innen umformt. Daher sind die Schneidelemente 32b und die Schneidelemente 32c im Wesentlichen gleich tief in das Material des Rohrs 4 eingedrungen. Dieses wird durch die in Fig. 7 eingezeichneten Eindringtiefen t₁ und t₂ der Schneidelemente 32b und 32c deutlich, die gleich groß sind.

## Patentansprüche

1. Pressverbindungssystem (2) zum unlösbaren Verbinden eines Fittings (20) mit einem Rohr (4),
- mit einer Pressbacke (6),
- mit einer an der Innenseite der Pressbacke (6) ausgebildeten Presskontur (16),
- wobei die Presskontur (16) einen zylindrischen Pressabschnitt (16a) aufweist,
- mit einem Fitting (20),
- mit einem Fittinggrundkörper (22) und einer eine Presskammer (24) ausbildenden Presshülse (26),
- wobei ein Dichtring (28) am relativ zum Fittinggrundkörper (22) proximalen Ende (30) der Presskammer (24) und ein Schneidring (32) am relativ zum Fittinggrundkörper (22) distalen Ende (34) der Presskammer (24) angeordnet sind und
- wobei der Schneidring (32) einen mittigen zylindrischen Abschnitt (32a), am distalen Ende angeordnete Schneidelemente (32b) und am proximalen Ende angeordnete Schneidelemente (32c) aufweist,
**dadurch gekennzeichnet,**
- **dass** die Presskontur (16) einen an den zylindrischen Pressabschnitt (16a) angrenzenden, zumindest abschnittweise, konisch ausgebildeten distalen Pressabschnitt (16b) und einen an den zylindrischen Pressabschnitt (16a) angrenzenden, zumindest abschnittweise, konisch ausgebildet proximalen Pressabschnitt (16c) aufweist,
- **dass** der distale Pressabschnitt (16b) ausgebildet ist, um bei einem radialen Verpressen der Presshülse (26) das distale Ende des Schneidrings (32) radial nach innen umzuformen,
- **dass** der zylindrische Pressabschnitt (16a) ausgebildet ist, um bei dem radialen Verpressen der Presshülse (26) das proximale Ende des Schneidrings (32) radial nach innen umzuformen und
- **dass** der proximale Pressabschnitt (16c) ausgebildet ist, um bei dem radialen Verpressen der Presshülse (26) den Dichtring (28) radial nach innen umzuformen.

2. Fitting (20) im verpressten Zustand,
- mit einem Rohr (4), mit dem der Fitting (20) unlösbar verbunden ist,
- mit einem Fittinggrundkörper (22) und einer eine Presskammer (24) ausbildenden Presshülse (26),
- wobei ein Dichtring (28) am relativ zum Fittinggrundkörper (22) proximalen Ende (30) der Presskammer (24) und ein Schneidring (32) am relativ zum Fittinggrundkörper (22) distalen Ende (34) der Presskammer (24) angeordnet sind und
- wobei der Schneidring (32) einen zylindrischen Abschnitt (32a) und am distalen Ende angeordnete Schneidelemente (32b) und am proximalen Ende angeordnete Schneidelemente (32c) aufweist,
- wobei im radial verpressten Zustand der Presshülse (26) der Schneidring (32) und der Dichtring (28) radial nach innen umgeformt sind und die Schneidelemente (32b, 32c) teilweise in das Rohr (4) eingedrungen sind,
**dadurch gekennzeichnet,**
- **dass** im radial verpressten Zustand der Presshülse (26) das distale Ende des Schneidrings (32), zumindest abschnittsweise, auf einen Radius kleiner als der Radius des proximalen Endes des Schneidrings (32) nach innen umgeformt ist und
- **dass** die distalen Schneidelemente (32b), zumindest abschnittsweise, tiefer als die proximalen Schneidelemente (32c) in das Rohr (4) eingedrungen sind.

## Claims

1. Press connection system (2) for non-detachable connection of a fitting (20) to a pipe (4),
- with a press jaw (6),
- with a press contour (16) formed on the inside of the press jaw (6),
- wherein the press contour (16) has a cylindrical press section (16a),
- with a fitting (20),
- with a fitting base body (22) and a press sleeve (26) forming a press chamber (24),
- wherein a sealing ring (28) is arranged at the proximal end (30) of the press chamber (24) relative to the fitting main body (22) and a cutting ring (32) is arranged at the distal end (34) of the press chamber (24) relative to the fitting main body (22),
- wherein the cutting ring (32) has a central cylindrical portion (32a), cutting elements (32b) disposed at the distal end and cutting elements (32c) disposed at the proximal end,
**characterised in**
- **that** the press contour (16) has a distal press section (16b) adjacent to the cylindrical press section (16a), which is conical at least in sections, and a proximal press section (16c) adjacent to the cylindrical press section (16a), which is conical at least in sections,
- **that** the distal press portion (16b) is formed to reshape the distal end of the cutting ring (32) radially inwardly when the press sleeve (26) is pressed radially,
- **that** the cylindrical press portion (16a) is formed to reshape the proximal end of the cutting ring (32) radially inwardly upon the radial pressing of the press sleeve (26), and
- **that** the proximal press portion (16c) is formed to reshape the sealing ring (28) radially inwardly upon the radial pressing of the press sleeve (26).

2. Fitting (20) in the pressed state,
- with a tube (4), which is connected non-detachably to the fitting (20),
- with a fitting base body (22) and a press sleeve (26) forming a press chamber (24),
- wherein a sealing ring (28) is disposed at the proximal end (30) of the press chamber (24) relative to the fitting main body (22) and a cutting ring (32) is disposed at the distal end (34) of the press chamber (24) relative to the fitting main body (22), and
- wherein the cutting ring (32) comprises a cylindrical portion (32a) and cutting elements (32b) disposed at the distal end and cutting elements (32c) disposed at the proximal end,
- wherein in the radially compressed state of the press sleeve (26) the cutting ring (32) and the sealing ring (28) are deformed radially inwards and the cutting elements (32b, 32c) have partially penetrated the tube (4),
**characterised in**
- **that**, in the radially compressed state of the press sleeve (26), the distal end of the cutting ring (32) is deformed inwards, at least in sections, to a radius smaller than the radius of the proximal end of the cutting ring (32), and
- **that** the distal cutting elements (32b), at least in sections, have penetrated deeper into the tube (4) than the proximal cutting elements (32c).

## Revendications

1. Système de raccordement par serrage (2) pour raccorder de manière indétachable un raccord (20) à un tube (4),
- avec une mâchoire de pressage (6),
- avec un contour de pressage (16) formé sur le côté intérieur de la mâchoire de pressage (6),
- le contour de pressage (16) comprenant une section de pressage cylindrique (16a),
- avec un raccord (20),
- avec un corps de base de raccord (22) et une douille de pressage (26) formant une chambre de pressage (24),
- une bague d'étanchéité (28) étant disposée, par rapport au corps de base du raccord (22), à l'extrémité proximale (30) de la chambre de pressage (24) et une bague coupante (32) étant disposée, par rapport au corps de base du raccord (22), à l'extrémité distale (34) de la chambre de pressage (24) et
- la bague coupante (32) comprenant une section cylindrique centrale (32a), des éléments coupants (32b) disposés à l'extrémité distale et des éléments coupants (32c) disposés à l'extrémité proximale,
**caractérisé**
- **en ce que** le contour de pressage (16) présente une section de pressage distale (16b) adjacente à la section de pressage cylindrique (16a), de forme conique au moins par sections, et une section de pressage proximale (16c) adjacente à la section de pressage cylindrique (16a), de forme conique au moins par sections,
- **en ce que** la section de pressage distale (16b) est conçue pour déformer l'extrémité distale de la bague coupante (32) radialement vers l'intérieur lors d'un pressage radial de la douille de pressage (26),
- **en ce que** la section de pressage cylindrique (16a) est conçue pour déformer l'extrémité proximale de la bague coupante (32) radialement vers l'intérieur lors du pressage radial de la douille de pressage (26), et
- **en ce que** la section de pressage proximale (16c) est conçue pour déformer la bague d'étanchéité (28) radialement vers l'intérieur lors du pressage radial de la douille de pressage (26).

2. Raccord (20) à l'état pressé,
- avec un tube (4) auquel le raccord (20) est relié de manière indétachable,
- avec un corps de base de raccord (22) et une douille de pressage (26) formant une chambre de pressage (24),
- une bague d'étanchéité (28) étant disposée, par rapport au corps de base du raccord (22), à l'extrémité proximale (30) de la chambre de pressage (24) et une bague coupante (32) étant disposée, par rapport au corps de base du raccord (22), à l'extrémité distale (34) de la chambre de pressage (24) et
- la bague coupante (32) comprenant une section cylindrique (32a) et des éléments coupants (32b) disposés à l'extrémité distale et des éléments coupants (32c) disposés à l'extrémité proximale,
- la bague coupante (32) et la bague d'étanchéité (28) étant, dans l'état radialement comprimé de la douille de pressage (26), déformées radialement vers l'intérieur et les éléments coupants (32b, 32c) étant en partie enfoncés dans le tube (4),
**caractérisé**
- **en ce que**, dans l'état radialement comprimé de la douille de pressage (26), l'extrémité distale de la bague coupante (32) est, au moins par sections, déformée vers l'intérieur à un rayon plus petit que le rayon de l'extrémité proximale de la bague coupante (32), et
- **en ce que** les éléments coupants distaux (32b) sont, au moins par sections, enfoncés dans le tube (4) plus profondément que les éléments de coupe proximaux (32c).
